# EUROPEAN PATENT APPLICATION

(11) **EP 4 847 768 A1**
(43) Date of publication of application: **02.12.2026**
(21) Application number: 25179636.3
(22) Date of filing: 29.05.2025
(51) Int. Cl.: F03D 13/40

(54) **SUPPORT-STRUCTURE AND METHOD FOR MOUNTING A WIND TURBINE COMPONENT FOR TRANSPORTATION**

(71) Applicant: Siemens Gamesa Renewable Energy A/S, 7330 Brande (DK)
(72) Inventor: Moeller, Jesper, 7330 Brande (DK)
(74) Representative: SGRE-Association

(57) **Abstract**

The invention pertains to a support-structure (2) for mounting a wind turbine component for transportation, especially a vertically oriented section of a wind turbine tower (21) or a nacelle, the support-structure (2) comprising:
- a support-flange (3) comprising a plurality of bolt-holes (H) and being configured such that a corresponding component-flange (T) of a wind turbine component, especially a flange of a wind turbine tower (21) or a flange of a nacelle, could be attached to it by means of a plurality of bolts (5),
- a number of bolt-holding-devices (1), each bolt-holding-device (1) comprising a lifting-platform (11) designed to mount a plurality of bolts (5) and lifting-means (13) designed to lift the lifting-platform (11) in a vertical direction from a lower position to a upper position wherein the bolt-holding-device (1) is attached to the support-flange (3) or attached on the floor under the support-flange (3) such that bolts (5) are able to project through the support-flange (3) when mounted on the lifting-platform (11).

Furthermore, the invention describes a method and a vessel for mounting a wind turbine component for transportation.

## Description

The invention describes a support-structure and a method for mounting a wind turbine component for transportation, especially a vertically oriented section of a wind turbine tower or a nacelle. It also describes a vessel.

Offshore wind farms are playing an increasingly important role in global energy supply, providing clean and renewable energy without the environmental impacts associated with traditional energy sources. Offshore wind farms now provide more than 50 GW of power worldwide. Installing wind-turbines offshore requires special solutions.

Offshore wind turbines are typically mounted on support structures anchored to the seabed. These support structures include monopiles, transition pieces as part of foundations, lattice structures or jackets placed in the seabed. To connect the mast of the wind turbine to this support structure or other structures, a connecting flange is usually provided on the underside of the mast. This flange has several screw holes distributed along its circumference.

When transporting a wind turbine at sea, it must be securely fastened, at least temporarily, to the deck of a ship and in particular to a support-structure on the deck ("sea fastening"). This securing is done by attaching an element of the wind turbine, e.g. the tower, with its flange to a flange of the sea fastening by inserting bolts. The bolts are then screwed tightly using nuts.

Typically, the bolts are inserted by hand, possibly assisted by cranes. During this process, bolts can fall down. With a weight of more than 10 kg per bolt, this represents a serious risk to the health of people working there.

It is the object of the present invention to improve the known systems and methods and provide a support-structure and a method for mounting a wind turbine component for transportation as well as a vessel for overcoming the above described problems. It is especially an object of the present invention to ensure safe working conditions while securing a component of a wind turbine on a ship.

This object is achieved by a support-structure according to claim 1, a method according to claim 9 and a vessel according to claim 11.

A support-structure according to the invention serves for mounting a wind turbine component for transportation, especially a vertically oriented section of a wind turbine tower or a nacelle. It comprises the following components:
- a support-flange comprising a plurality of bolt-holes and being configured such that a corresponding component-flange of a wind turbine component, especially a flange of a wind turbine tower or a flange of a nacelle, could be attached to it by means of a plurality of bolts,
- a number of bolt-holding-devices, each bolt-holding-device comprising a lifting-platform designed to mount a plurality of bolts and lifting-means designed to lift the lifting-platform in a vertical direction from a lower position to a upper position wherein the bolt-holding-device is attached to the support-flange or attached on the floor under the support-flange such that bolts are able to project through the support-flange when mounted on the lifting-platform.

The support-structure could also be designated as "support-structure " or "sea fastening", since it is especially advantageous for sea transportation. It is used to securely mount a wind turbine component like a vertically oriented section of a wind turbine tower or a nacelle on board of a vessel or other transportation means to be brought to its destination for assembly. The word "mounting" used here means "securing" or "attaching". The wind-turbine-component should not move on the vessel even when there are gusts of wind, sea conditions or moving forces.

The wind turbine components are typically equipped with a component-flange. For example, each segment of the tower has flanges on its face sides where it could be attached to another component of the wind turbine, e.g. the support structure, another tower segment or the nacelle, having an according flange. The component-flange is a conventional flange and the part "component" is only used for clarity reasons. Such component-flanges are well known in the art.

The main elements of the support-structure are the support-flange and the bolt-holding-device.

The support-flange is a conventional flange and the part "support" is only used to clarify that this is the flange of the support-structure . As the component-flange it is a flat, rigid structure with multiple bolt-holes, especially in the shape of a circular ring. The bolt-holes are preferably arran-ged equidistantly on the flange and the bolt-holes of the support-flange and the component-flange should correspond to each other (overlap) in order be attached to another in an easy way. This is well known in the art, since wind turbine components are usually connected to support-flanges for transportation.

In the case there are component-flanges with different diameters, there could be used several support-structures, each fitting to one of the component-flanges or one support-structure could have a flange with several concentric rows of bolt-holes.

Typically, the support-flange is held by a support-ring, while these two components form the support-structure in the art. However, the invention also facilitates a support-ring with holes or a segmented support-ring, since the bolt-holding-devices are attached under the support-flanges (and not to the support-ring).

The bolt-holding-device allows a secure handling of bolts for fastening a wind-turbine component. There are typically several bolt-holding-devices attached to the support-flange, however, it is not inevitably necessary that every single bolt-hole of the support-flange is served by a bolt-holding-device. In many cases it is even preferable that not all of the bolt-holes are served by a bolt-holding-device, preferable where only 95 percent or even more preferable where only 70 to 95 percent of the bolt-holes are served by a bolt-holding-device. The number of bolts or the portion of bolt-holes filled with bolts could be chosen depending on the stiffness of the support structure and/or the chosen bolt sizes. In that way the attachment of the tower and detachment of the tower may be carried out faster.

Each bolt-holding-device comprises a lifting-platform and lifting-means, designed to manage bolts (With the term "bolts" also studs or screws are meant). The lifting-platform is made to mount multiple bolts. These bolts could be already fastened to this platform or be part of this platform or could be mounted in bolt-mounts. For example, for an easy assembly, each lifting-platform could have a row of bolt-mounts, e.g. with a thread in an inside bore in order to screw bolts in the bolt-mounts, or having a bore in order to mount heads of headed-bolts. After the bolt-holding-device is fastened to the support-flange, bolts could be brought in the bolt-mounts. Although there is the danger of bolts being dropped, it is only needed to do this process only once. A bolt-holding-device provided with bolts could be used many times. It is clear that the bolts or bolt-mounts of each bolt-holding-device are arranged to correspond to the bolt-holes of the support-flange. For a support-flange with several rows of bolt-holes there could be corresponding rows of bolts or bolt-mounts on any lifting-platform. Each row on the lifting-platform should be shaped according to a segment of the bolt-holes on the support-flange, especially in the shape of an arc.

The lifting-means are any means that could be used to facilitate a vertical movement of the lifting-platform between a lower position (for storage or access) and an upper position (connecting position for attachment). When a tower segment is lifted onto the support-structure, it is disadvantageous when there are bolts protruding from it. Thus, the bolts are arranged such that their ends are deeper than the upper surface of the support-flange or planar with it, then the component-flange is put onto the support-flange such that their bolt-holes correspond to each other (overlap) and then the lifting-platforms are lifted with the lifting-means such that the bolts go through the bolt-holes of both flanges and the bolt ends protrude out of the component-flange to be fastened with nuts. In this position, heads of the bolts or bolt-mounts are preferable in contact with the lower surface of the support-flange so that the forces for holding the component-flange is carried by the bolts and not by other sections of the bolt-holding-device. In another preferred embodiment described further below heads of the bolts or bolt-mounts are in the above described position in contact with an inner surface of a housing of the bolt-holding-device attached to the lower surface of the support-flange.

The lifting means could be a hydraulic or pneumatic cylinder system attached to the lifting-platform. The lifting-means could also be screws that lift the lifting-platform by turning them. The lifting-means does not have to be motorized. It is only required that the lifting means are able to lift the platform and steadily hold it in a certain position where it has been lifted to.

Looking at the lower position and the upper position of the lifting-platform, these positions should have a vertical distance of preferably larger than 50 mm, since the flanges have a certain thickness and the bolts should additionally protrude out of the component-flange.

It is an important feature of the invention that the bolt-holding-device is attached to the support-flange or attached on the floor under the support-flange such that bolts are able to project through the support-flange when mounted on the lifting-platform. It should be a load bearing attachment such that the complete bolt-holding-device with bolts is securely hanging from the support-flange. It is particularly preferred that the bolt-holding-device is not connected with the surface of the support-ring, but only with the support-flange.

It is not necessary that the bolt-holding-device also holds the weight of the wind turbine component, since this is held by the support-flange and the bolts.

It is preferred that the connection of the bolt-holding-device to the support-flange is the only connection of the bolt-holding-device with the support-structure, i.e. the bolt-holding-device is contactless to other parts of the support-structure (besides its support-flange). Thus, it is also possible that the support-ring is made out of ring-segments and/or pillars under the support-flange arranged with distances to each other. Such embodiment has the advantage that the inner part of the support-structure could be reached from the outside.

A method according to the invention serves for mounting a wind turbine component for transportation, especially a vertically oriented section of a wind turbine tower or a nacelle on a support-structure according to the invention. It comprises the following steps:
- providing bolts (5) to fill the number of bolt-holding devices (1) (this means if the number of bolt-holding-devices is not filled with bolts, fill the number of bolt-holding-devices with bolts),
- move each lifting-platform of the number of bolt-holding-devices such that the bolts do not protrude out of the support-flange, wherein it is preferred that the bolts are planar with an upper surface of the support-flange,

- arrange the wind turbine component (e.g. a tower) on the support-flange such that the holes of the support-flange and the component-flange correspond,
- lift each lift-platform such that the bolts protrude out of the holes of the component-flange and fasten the component-flange onto the support-flange with the bolts.

This method ensures secure and efficient mounting of wind turbine components, such as vertically oriented tower sections or nacelles, for transportation. In the support-structure, bolt-holding-devices are positioned under or attached to the support-flange, with their lifting-platforms in the lower positions. One should ensure that every device designed to hold bolts is equipped with the necessary bolts for secure mounting. If there are no bolts in the bolt-holding-device, bolts are placed onto the lifting-platform, e.g. in bolt-mounts. Damaged bolts may be replaced by other bolts. Each lifting-platform should be adjusted such that the bolts do not protrude beyond the upper surface of the support-flange, e.g. the lifting-platforms are adjusted such that bolts are planar with or lower than the upper surface of the support-flange before the wind turbine component is lifted onto the support-flange.

Now, the wind turbine component, e.g. a wind turbine tower is lifted onto the support-flange. It should be ensured that the holes in both the support-flange and the component flange are perfectly aligned. By carefully placing the wind turbine component on the support structure and matching the bolt holes, a swift and secure fastening is possible.

Then, each lift-platform is elevated so that the bolts protrude through the holes in the component flange (and, thus also through the support-flange), and these bolts are tightened with nuts to securely fasten the component flange onto the support-flange. With the wind turbine component firmly attached to the support-flange via the bolts and the nuts (facilitated by the bolt-holding-device), the entire support-structure can be safely transported, ensuring minimal risk of damage or displacement during transit and with also minimal risk while fastening.

A vessel according to the invention is designed to transport a wind turbine component, especially a wind turbine tower or a nacelle. It comprises at least one support-structure according to the invention.

Particularly advantageous embodiments and features of the invention are given by the dependent claims, as revealed in the following description. Features of different claim categories may be combined as appropriate to give further embodiments not described herein.

Concerning a preferred support-structure, at least one, preferably each, bolt-holding-device (of the number of bolt-holding devices of the support-structure) may comprise a number of vertical guidance-elements, preferably multiple guidance-elements, especially rods, rails and/or pillars. The lifting-platform may be designed such that its vertical motion is guided by the guidance-elements. This has the advantage that a tilting of the lifting-platform is suppressed by the guidance-elements. It is preferred that the bolt-holding-device may comprise two guidance-elements, being arranged at opposite sides of the lifting-platform. It surely could have additional guidance-elements, too.

Concerning a preferred support-structure, at least one, preferably each, lifting-means (of the number of lifting-means of the support-structure) may comprise a number of lifting-actuators. The bolt-holding-device may be designed such that the lifting-platform is lifted when the number of lifting-actuators is actuated. There is no need that the lifting actuators are motorized. They also could be actuated manually or with an additional motorized tool such as an electric screwdriver. It is preferred that at least one lifting-actuator may be a threaded lifting-rod and the lifting-platform may be designed to be lifted by turning the lifting-rod. Alternatively, it is preferred that at least one lifting-actuator may be a hydraulic cylinder.

Concerning a preferred support-structure, at least one, preferably each, bolt-holding-device (of the number of bolt-holding devices of the support-structure) may comprise a housing, especially shaped as a ring-segment, attached to a bottom surface of the support-flange and supporting the lifting-platform and especially also holding guidance-elements.

Concerning a preferred support-structure, the housing may be shaped such that it has a top-portion and a bottom-portion protruding from the support-flange to the center (the inner side) of the support-structure and holding the lifting-platform as well as a lifting-actuator, of the bolt-holding-device. A portion could be made from a floor and a ceiling of a lifting compartment, however, there could also be additional structures fastened on the housing. Thus, the top-portion and the bottom-portion protruding away from the bolts to the annular wall of the support-structure. Due to the protrusion of the portions, it is possible to arrange lifting means also on other positions than under the support-flange.

It is preferred that the lifting-actuator, e.g. a lifting screw, may comprise a coupler vertically protruding out of the top-portion or bottom portion, being designed to be coupled with a drill-device or screwdriver device. It is very difficult to reach lifting-actuators that are positioned under the support-flange. A lifting-actuator arranged some distance away from the flange due to the special top-portion and bottom-portion could be reached very easily.

Concerning a preferred support-structure, at least one, preferably each, bolt-holding-device (of the number of bolt-holding devices of the support-structure) may comprise multiple bolts or bolt-mounts arranged in a horizontal row, especially in the shape of an arc, and aligned with the bolt-holes in the support-flange. It is preferred that the number of bolts or bolt-mounts may be more than five and/or less than ten. The fewer bolts the more bolt-holding-devices must be fastened to the support-flange, the more bolts the heavier is a bolt-holding-device.

A preferred support-structure may comprise a support-ring, e.g. a hollow cylinder shaped structure holding the support-flange or a ring of individual segments, having an inner surface and being arranged below the support-flange. As said above, the support-ring may bear the support-flange of the support-structure. The number of bolt-holding-devices may be arranged such that there is a (continuous) distance between the inner surface and the number of bolt-holding-devices (i.e. the bolt device is not connected to the inner surface). It is preferred that all bolt-holding-devices may be fastened to the support-flange, only and not at the ring. Since the bolts themselves attach the flanges at each other, there is no need for additional support of the bolt-holding-device and the special arrangement allows special shapes of the support-ring, e.g. an open shape where the support ring is made of pillars arranged between bolt-holding-devices.

A preferred support-structure is designed to be connectable (or already connected) to a deck of a vessel, preferably a ship.

According to a preferred method, for fastening the component-flange onto the support-flange with the bolts, nuts may be screwed on the bolts so that the flange is securely connected to the support-flange.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a vessel with a wind turbine mounted on a support-structure,
Figure 2 shows a support-structure,
Figure 3 shows a side view of a support-structure according to the invention with bolt-holding-devices,
Figure 4 shows a bolt-holding-device according to the invention without bolts,
Figure 5 shows a bolt-holding-device according to the invention with bolts,
Figure 6 shows a bolt-holding-device according to the invention with bolts lifted in a connection position,
Figure 7 shows a side view of a bolt-holding-device according to the invention lifted from a lower position to a connection position and connecting a support-flange with a component-flange,
Figure 8 shows a preferred example of a support-structure.

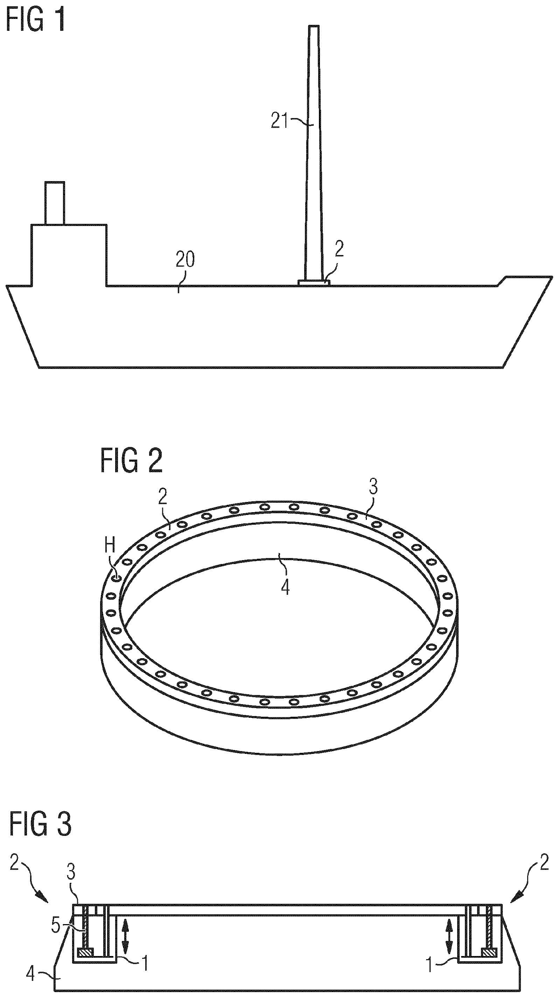

Figure 1 shows a vessel 20 with a wind turbine tower 21 as wind turbine component 21 mounted on a support-structure **2.** As can be seen, the tower 21 is transported in a standing position. Thus, its secure mounting on the support-structure 2 is essential.

Figure 2 shows a simple example for a support-structure 2 comprising a support-flange 3 with a plurality of bolt-holes H and a support-ring 4. Since the support-ring has to suffer the complete forces of the wind turbine component 21 attached on the support-flange 3 during transport (see figure 1), it could have additional strengthening structures such as vertical ribs on the inside or outside (not shown).

Figure 3 shows a side view of a support-structure 2 according to the invention with two bolt-holding-devices 1. These bolt-holding-devices 1 could be arranged around the whole support-flange 3, however, this figure only shows a vertical cut through the support-structure 2. There are bolts 5 arranged in the bolt-holding-devices 1 that could be vertically moved (s. arrows) and are here planar with the upper surface of the support-flange 3. As can be seen, the bolt-holding-devices 1 are only fastened at the bottom part of the support-flange 3 and not at the support-ring 4.

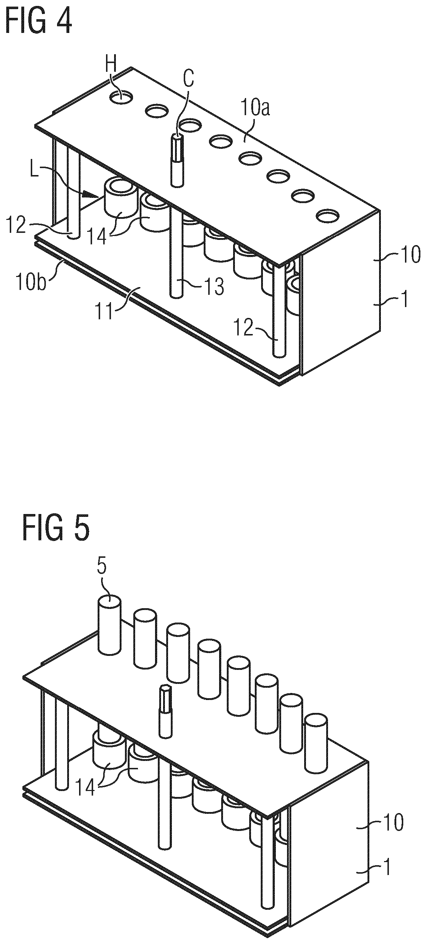

Figures 4 to 6 show a bolt-holding-device 1 more accurately in different positions in a perspective manner. They also illustrate a method to use the bolt-holding-device 1 for attaching a wind-structure component on the support-structure 2 of figure 3.

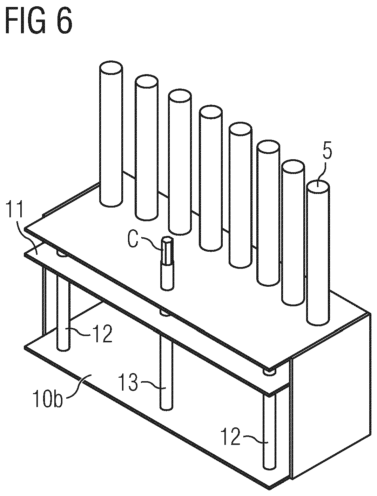

Figure 4 shows a bolt-holding-device 1 according to the invention. The bolt-holding-device 1 comprises a lifting-platform 11 designed to mount a plurality of bolts 5 and lifting-means designed to lift the lifting-platform 11 in a vertical direction from a lower position to an upper position (see figure 6) wherein the bolt-holding-device 1 here is yet not equipped with bolts 5, but comprises bolt-mounts 14, where bolts 5 can be inserted. The lifting-platform 11 is here in the lower position.

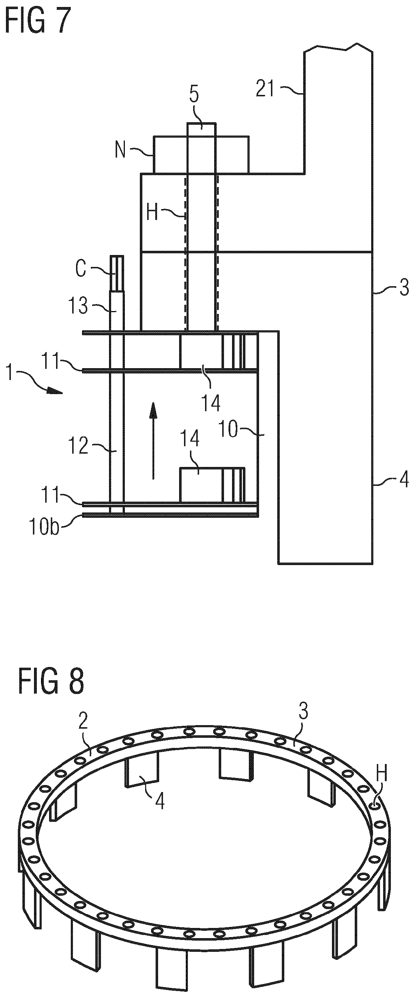

The bolt-holding-device 1 comprises a housing 10 that is especially shaped as a ring-segment such that it accords to the shape of the support-flange 3 of the support-structure 2. This housing 10 supports the lifting-platform 11. In this example, the housing 10 is shaped such that it has a top-portion 10a and a bottom-portion 10b protruding from a flange (see figure 7) to the center (inner side) of the support-structure 2. The portions 10a, 10b are here the bottom and the ceiling of the housing and forming together with walls a lifting-compartment L, comprising the lifting-platform 11.

In the lifting-compartment L there are a lifting-actuator 13 in the front center and guidance-elements 12 at the front sides of the lifting-platform 11. Vertically protruding out of the top-portion, the lifting-actuator 13 comprises a coupler C being designed to be coupled with a drill-device or screwdriver device in order to lift the lifting-platform 11. Here, the lifting-means comprises a lifting-actuator 13 in the form of a threaded lifting-rod 13 and the lifting-platform 11 is designed to be lifted by turning the lifting-rod 13. The vertical guidance-elements 12 are here two pillars arranged at opposite sides of the lifting-platform 11, and the lifting-platform 11 is designed such that its vertical motion is guided by the guidance-elements 12.

Figure 5 shows the bolt-holding-device 1 equipped with bolts 5, that have been screwed in the bolt-mounts 14 of the lifting-platform 11. The eight bolts 5 in total are arranged in a horizontal row and protruding out of the bolt-holes H of the housing 10. Looking at figure 7, showing a side view of the bolt-holding-device 1, the upper face of the bolts 5 would be planar with the upper surface of the support-flange 3.

Concerning a method for mounting a wind turbine component 21 for transportation on a vessel 20, as shown in figure 1, and attaching it on a support-structure 2 as shown in figures 2 and 3 with bolt-holding-devices 1, as shown in figure 4, comprises the following steps:
- Fill the number of bolt-holding-devices 1 with bolts 5, by screwing bolts into the bolt-mounts 14 on the lifting-platform 11. This step has to be done once for all bolt-holding-devices 1 and then the support-structure 2 could be used several times. Damaged bolts 5 could easily be replaced.
- Move each lifting-platform 11 of the number of bolt-holding-devices 1 such that the bolts 5 do not protrude out of the support-flange 3, wherein it is preferred that the bolts 5 are planar with an upper surface of the support-flange 3. The bolt-holding-device 1 is shown in figure 5, where the bolts 5 are inserted and the position of the lifting-platform 11 is at the bottom of the bolt-holding-device 1.

- Arrange the wind turbine tower 21 on the support-flange 3 such that the holes of the support-flange 3 and the component-flange T correspond. The tower 21 is placed in a standing manner on the support-structure 2. The component-flanges T and the support-flange 3 correspond to each other concerning their bolt-holes H such that the bolts 5 could be slipped through the bolt-holes H, as shown in figure 7.
- Lift each lift-platform 11 such that the bolts 5 protrude out of the holes of the component-flange T and fasten the component-flange T onto the support-flange 3 with the bolts 5. This is shown in figure 6, where the lifting-platform 11 is lifted to a top position (connection position), and in figure 7, where the bolts are fastened with nuts N (see figure 7) and securing the component-flange T on the support-flange 3.

Figure 7 shows a side view of a bolt-holding-device 1 according to the invention lifted from a lower position to a connection position and connecting a support-flange 3 with a component-flange T. The bolts are fastening both flanges 3, T with their bolt-mounts 14 pressing from below and their nuts N pressing from above, holding the wind turbine component 21 securely on the support-structure 2.

Figure 8 shows a preferred example of a support-structure 2. In difference to figure 2, the support-ring 4 is made from ring-segments that are distanced from each other. There also could be pillars instead of ring-segments. It should be noted that not all bolt-holes must be used for connecting the wind turbine component 21 with the support-structure 2.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of" means "at least one". The mention of a "unit" or a "device" does not preclude the use of more than one unit or device.

## Claims

1. A support-structure (2) for mounting a wind turbine component (21) for transportation, especially a vertically oriented section of a wind turbine tower (21) or a nacelle, the support-structure (2) comprising:
- a support-flange (3) comprising a plurality of bolt-holes (H) and being configured such that a corresponding component-flange (T) of a wind turbine component (21), especially a flange of a wind turbine tower (21) or a flange of a nacelle, could be attached to it by means of a plurality of bolts (5),
- a number of bolt-holding-devices (1), each bolt-holding-device (1) comprising a lifting-platform (11) designed to mount a plurality of bolts (5) and lifting-means (13) designed to lift the lifting-platform (11) in a vertical direction from a lower position to a upper position wherein the bolt-holding-device (1) is attached to the support-flange (3) or attached on the floor under the support-flange (3) such that bolts (5) are able to project through the support-flange (3) when mounted on the lifting-platform (11).

2. The support-structure (2) according to claim 1, wherein at least one bolt-holding-device (1) comprises a number of vertical guidance-elements (12), especially rods, rails and/or pillars, and the lifting-platform (11) is designed such that its vertical motion is guided by the guidance-elements (12),
preferably wherein at least one bolt-holding-device (1) comprises two guidance-elements (12), being arranged at opposite sides of the lifting-platform (11).

3. The support-structure (2) according to one of the preceding claims, wherein at least one lifting-means (13) comprises a number of lifting-actuators (13) and the bolt-holding-device (1) is designed such that the lifting-platform (11) is lifted when the number of lifting-actuators (13) is actuated,
preferably wherein at least one lifting-actuator (13) is a threaded lifting-rod (13) and the lifting-platform (11) is designed to be lifted by turning the lifting-rod, or preferably wherein at least one lifting-actuator (13) is a hydraulic cylinder.

4. The support-structure (2) according to one of the preceding claims, wherein at least one bolt-holding-device (1) comprises a housing (10), especially shaped as a ring-segment, attached to a bottom surface of the support-flange (3) and supporting the lifting-platform (11) and especially also holding guidance-elements (12).

5. The support-structure (2) according to claim 4, wherein the housing (10) is shaped such that it has a top-portion (10a) and a bottom-portion (10b) protruding from the support-flange (3) to the center of the support-structure (2) and holding the lifting-platform (11) as well as a lifting-actuator (13), of the bolt-holding-device (1),
preferably wherein the lifting-actuator (13) comprises a coupler (C) vertically protruding out of the top-portion (10a) being designed to be coupled with a drill-device or screwdriver device.

6. The support-structure (2) according to one of the preceding claims, wherein at least one bolt-holding-device (1) comprises multiple bolts (5) or bolt-mounts (14) arranged in a horizontal row and aligned with the bolt-holes (H) in the support-flange (3),
preferably wherein the number of bolts (5) or bolt-mounts (14) is more than five and/or less than ten.

7. The support-structure (2) according to one of the preceding claims, comprising a support-ring (4) having an inner surface and being arranged below the support-flange (3), wherein the number of bolt-holding-devices (1) is arranged such that there is a distance between the inner surface and the number of bolt-holding-devices (1).

8. The support-structure (2) according to one of the preceding claims, being designed to be connectable to a deck of a vessel (20), preferably a ship.

9. A method for mounting a wind turbine component (21) for transportation, especially a vertically oriented section of a wind turbine tower (21) or a nacelle on a support-structure (2) according to one of the preceding claims, the method comprising the steps:
- providing bolts (5) to fill the number of bolt-holding devices (1),
- move each lifting-platform (11) of the number of bolt-holding-devices (1) such that the bolts (5) do not protrude out of the support-flange (3), wherein it is preferred that the bolts (5) are planar with an upper surface of the support-flange (3),
- arrange the wind turbine component (21) on the support-flange (3) such that the holes of the support-flange (3) and the component-flange (T) correspond,
- lift each lift-platform (11) such that the bolts (5) protrude out of the holes of the component-flange (T) and fasten the component-flange (T) onto the support-flange (3) with the bolts (5).

10. The method according to claim 9, wherein for fastening the component-flange (T) onto the support-flange (3) with the bolts (5), nuts are screwed on the bolts (5) so that the component-flange (T) is securely connected to the support-flange (3).

11. A vessel (20), designed to transport a wind turbine component (21), especially a wind turbine tower (21) or a nacelle, comprising at least one support-structure (2) according to one of the claims 1 to 8.
